# FASCICULE DE BREVET EUROPEEN

(11) **EP 1 638 363 B1**
(45) Date de publication et mention de la délivrance du brevet: **23.01.2008**
(21) Numéro de dépôt: 05108396.2
(22) Date de dépôt: 13.09.2005
(51) Int. Cl.: H04Q 11/04

(54) **Commutateur à générateur de trames ethernet composites, pour un réseau de communication à multiplexage temporel**
Vermittlungsstelle zum Erzeugen von zusammengestellten Ethernetrahmen für ein Zeitmultiplexkommunikationsnetz
Switch for generating composite Ethernet frames for a time multiplexing communications network

(30) Priorité: 17.09.2004 FR 0452089
(43) Date de publication de la demande: 22.03.2006
(73) Titulaire: Alcatel Lucent, 75008 Paris (FR)
(72) Inventeur: BOUTAUD DE LA COMBE, Xavier, 22560, TREBEURDEN (FR)
(74) Mandataire: Sciaux, Edmond

(56) Documents cités:
- EP-A- 1 176 774
- US-A- 5 615 211
- US-A1- 2002 041 591
- US-A1- 2003 021 287
- (J) STEIN RAD DATA COMMUNICATIONS Y: "The PWE3 Control Word draft-stein-pwe3-controlword-00.txt" IETF STANDARD-WORKING-DRAFT, INTERNET ENGINEERING TASK FORCE, IETF, CH, 15 octobre 2002 (2002-10-15), XP015005372 ISSN: 0000-0004

## Description

L'invention concerne le domaine des réseaux de communication à multiplexage temporel (ou TDM pour « Time Division Multiplexing »), et plus particulièrement la commutation de canaux TDM au sein de tels réseaux, quel que soit ce qu'ils transportent.

Comme le sait l'homme de l'art, dans un réseau à multiplexage temporel, la voix (ou les paquets de données) à transmettre est (sont) intégrée(s) dans des trames TDM, par exemple de type « E1 », comportant des intervalles temporels (ou « time slots ») correspondant chacun à un canal logique TDM, et multiplexés temporellement.

Afin de parvenir à destination, les canaux TDM sont habituellement commutés au sein de matrices de commutation temporelle (ou « TDM switches » ou encore « Time Slot assigners ») de certains commutateurs du réseau.

Une variante de commutation consiste à commuter les canaux TDM au moyen de commutateurs (ou « switches ») de paquets de niveau 2. Au moins deux solutions ont été proposées à cet effet.

Une première solution consiste à transporter des agrégats de canaux (par exemple nx64 kbits/s, avec n >1), au lieu de canaux individuels, au moyen d'émulations de circuit ou d'agrégat TDM sous Ethernet. Cette solution est notamment décrite dans les documents du groupe de travail PWE3 de l'IETF. L'inconvénient de cette solution réside dans le fait qu'elle ne garantit pas les temps de transfert au sein des commutateurs. En outre, cette solution est destinée à transporter des agrégats et non à commuter des canaux TDM, et donc des communications.

Une seconde solution, proposée par la société Alcatel et intégrée dans certains de ses autocommutateurs téléphoniques fixes référencés E10, consiste à encapsuler des trames TDM au sein de cellules composites ATM. L'inconvénient de cette solution réside dans le fait qu'elle ne permet pas de faire varier les longueurs des cellules ou des paquets de données. En outre, elle ne peut pas être mise en oeuvre dans des commutateurs Ethernet, puisqu'elle est basée sur un brasseur (ou switch) ATM.

Le document US 2002 /041591 décrit un commutateur comprenant des cartes de ligne munie chacune d'une interface de commutation comportant :
- des moyens de traitement agencés pour :
   -- regrouper des intervalles temporels compris dans les trames TDM reçues d'un même lien TDM, et comportant la désignation d'un même port de destination ;
   -- puis les intégrer dans une trame Ethernet composite,
- et des moyens de commutation de trame Ethernet connectés à chaque carte de ligne et chargés de commuter les trames Ethernet composites vers l'une au moins des cartes de ligne en fonction de leurs ports de destination respectifs.

Les intervalles temporels compris dans les trames TDM reçues d'un même lien TDM et comportant la désignation d'un même port de destination sont parfois trop peu nombreux pour remplir efficacement des trames Ethernet transmises, et il n'est pas possible de faire attendre ces intervalles temporels au-delà d'un certain délai, sous peine de détériorer la qualité des communications téléphoniques.

Aucune solution connue n'apportant une entière satisfaction, l'invention a donc pour but d'améliorer l'efficacité du remplissage des trames Ethernet, tout en procurant un temps de transfert des paquets de données sensiblement garanti et si possible de courte durée.

Elle propose à cet effet un commutateur, pour un réseau de communication à multiplexage temporel, comportant au moins une carte de ligne munie d'une interface de commutation pouvant être raccordée à des liens TDM en vue de la commutation de trames TDM d'un type choisi, par exemple E1 ou T1 ou encore J1, comportant des intervalles temporels multiplexés temporellement et associés chacun à un canal TDM.

Chaque interface de commutation comporte:
- des moyens de traitement agencés pour :
   -- regrouper des intervalles temporels compris dans les trames TDM reçues et comportant la désignation d'un même port de destination ;
   -- puis les intégrer dans une trame Ethernet composite en des positions choisies d'une portion, dédiée aux données dites « utiles », et destinée à leur port de destination,
- et des moyens de commutation de trame Ethernet connectés à chaque carte de ligne et chargés de commuter les trames Ethemet composites vers l'une au moins des cartes de ligne en fonction de leurs ports de destination respectifs.
Le commutateur selon l'invention est caractérisé en ce que lesdits moyens de traitement sont agencés pour regrouper des intervalles temporels compris dans les trames TDM reçues sur une pluralité de ses liens TDM, et comportant la désignation d'un même port de destination.

Selon une autre caractéristique de l'invention, les moyens de traitement sont préférentiellement chargés, lorsqu'ils reçoivent une trame Ethernet composite, d'extraire les intervalles temporels qu'elle contient dans sa portion de données utiles en conservant leurs positions respectives, puis de déterminer les positions réelles (ou originelles) de ces intervalles temporels extraits en fonction de leurs positions respectives, et de reconstituer des trames TDM à partir des intervalles temporels et de leurs positions réelles.

Le commutateur selon l'invention peut comporter d'autres caractéristiques qui pourront être prises séparément ou en combinaison, et notamment :
- au moins une mémoire dans laquelle est stockée une table de correspondance entre les différents intervalles temporels, leurs positions au sein des trames Ethernet composites et leurs positions réelles au sein des trames TDM. Dans ce cas, les moyens de traitement sont chargés d'accéder à la mémoire, d'une part, pour déterminer les positions des intervalles temporels extraits devant être intégrés dans des trames Ethernet composites, et d'autre part, pour déterminer les positions réelles des intervalles temporels extraits d'une trame Ethernet composite reçue. Préférentiellement, chaque interface de commutation comprend une mémoire stockant la table de correspondance, laquelle est alors préférentiellement fournie par des moyens de contrôle,
- ses moyens de traitement peuvent être agencés de manière à associer à certaines au moins des trames Ethernet composites un niveau de priorité de transmission, de sorte que les moyens de commutation de trame Ethernet transmettent les trames Ethernet composites qu'ils reçoivent aux cartes de ligne concernées selon un ordre temporel fonction de leurs niveaux de priorité respectifs,
- lorsque ses moyens de traitement sont agencés pour commuter également des trames Ethernet non composites, ils peuvent associer aux trames Ethernet composites une priorité plus grande que celle associée aux autres trames afin de leur garantir un temps de transfert minimum,
- ses moyens de traitement peuvent être agencés de manière à constituer des trames Ethernet composites de longueur fixe ou variable,
   ➢ dans le cas variable, les moyens de traitement sont par exemple agencés de manière à tronquer la trame Ethernet composite après la position associée à son dernier intervalle temporel actif, de préférence lorsque la longueur de cette trame est supérieure à un nombre d'octets choisi. En variante, les moyens de traitement peuvent être agencés de manière à associer aux trames Ethernet composites des données d'information représentatives de leur longueur et des positions des intervalles temporels qu'elles contiennent. Dans ce cas, les moyens de traitement peuvent par exemple intégrer les données d'information dans la portion de données utiles des trames Ethernet composites, sous la forme d'un entête. En outre, les moyens de traitement peuvent être chargés, lorsqu'ils reçoivent une trame Ethernet composite, de déterminer les positions réelles des intervalles temporels extraits en fonction de leurs positions respectives et des données d'information,
- ses moyens de traitement peuvent être agencés de manière à contrôler un mécanisme de distribution d'horloge, par exemple à 8 kHz, au travers des moyens de commutation Ethernet, destiné à synchroniser les cartes de lignes entre elles. Ce mécanisme peut par exemple consister à récupérer du rythme par les récepteurs des cartes de lignes (les récepteurs reconstruisent l'horloge d'émission à partir d'informations de synchronisation transmises au travers des moyens de commutation de trame Ethernet ou intégrées dans les trames Ethernet composites et/ou transportées dans des trames Ethernet non composites) et/ou à diffuser du rythme par des liaisons de synchronisation dédiées entre cartes de lignes (qui ne transitent pas nécessairement par les moyens de commutation de trame Ethernet).

D'autres caractéristiques et avantages de l'invention apparaîtront à l'examen de la description détaillée ci-après, et des dessins annexés, sur lesquels :
- la figure 1 illustre de façon schématique un exemple de réalisation d'un commutateur selon l'invention,
- la figure 2 illustre de façon schématique un exemple de génération de trames Ethernet composites, selon l'invention, à partir de trames TDM, et
- la figure 3 illustre de façon schématique un exemple de réalisation d'une carte de ligne installée dans un commutateur selon l'invention.

Les dessins annexés pourront non seulement servir à compléter l'invention, mais aussi contribuer à sa définition, le cas échéant.

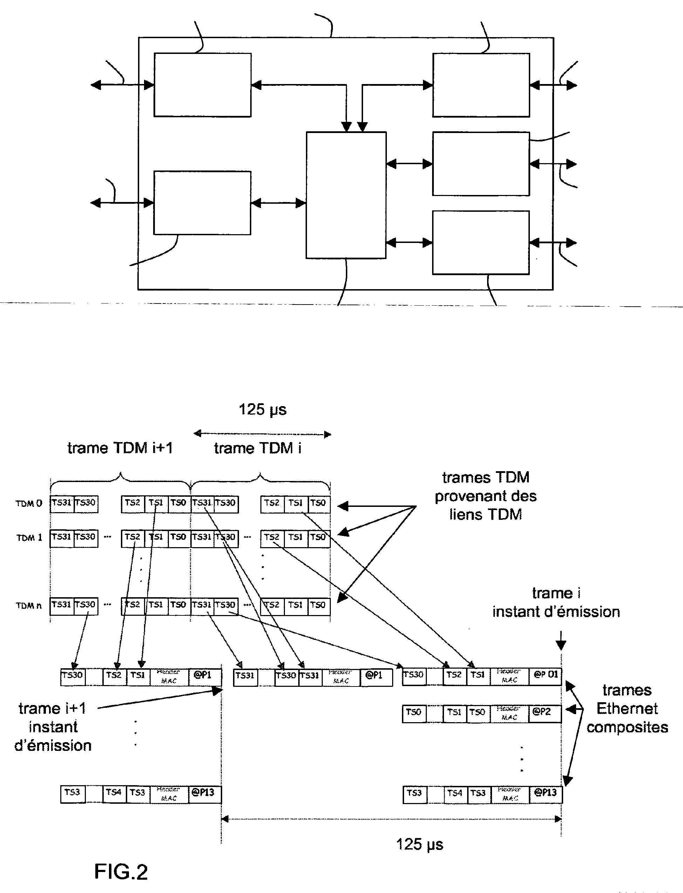

On se réfère tout d'abord à la figure 1 pour présenter un commutateur SW selon l'invention destiné à équiper un réseau de communication à multiplexage temporel (ou TDM).

Un tel commutateur SW comprend au moins une carte de ligne (ou « line board ») LBi raccordée, d'une part, à au moins un lien TDM TL, et généralement plusieurs, et d'autre part, à un module de commutation Ethernet ES commun. Dans l'exemple non limitatif illustré, le commutateur SW comprend cinq cartes de ligne LBi (i = 1 à 5), mais il pourrait comporter tout autre nombre de cartes de ligne (il faut en effet qu'il comporte soit au moins deux cartes supportant un ou plusieurs liens TDM, soit au moins une carte supportant au moins deux liens TDM).

Chaque lien TDM TL permet à la carte de ligne LBi concernée d'échanger avec des équipements (éventuellement un routeur ou un autre commutateur) des trames TDM d'un type choisi comportant des intervalles temporels multiplexés temporellement et associés chacun à un canal logique TDM.

Dans ce qui suit, on considère à titre d'exemple non limitatif, que les trames TDM sont de type E1, mais elles pourraient être d'un autre type, par exemple T1 ou J1.

Par exemple, une trame TDM de type E1 comprend généralement 32 intervalles temporels associés chacun à un canal à 64 kbits/s, et correspondant chacun à un octet. Les trames E1 sont émises toutes les 125 µs (ce qui correspond à une fréquence de 8 kHz). Une trame T1 comporte en revanche 24 intervalles temporels et est également émise toutes les 125 µs.

Chaque carte de ligne LBi comprend au moins une interface de commutation SI chargée de commuter chaque trame TDM, reçue sur l'un des liens TDM TL, vers une autre carte de ligne LBi' désignée par l'identifiant du port de destination qu'elle contient, via le module de commutation Ethernet ES, comme on le verra plus loin.

Selon l'invention, chaque interface de commutation SI comprend un module de traitement PM agencé de manière à regrouper des intervalles temporels (ou canaux TDM) compris dans les trames TDM reçues sur l'un au moins de ses liens TDM TL, et comportant la désignation d'un même port de destination, puis à les intégrer dans une trame Ethernet composite (c'est-à-dire dans un même paquet de données), en des positions choisies de la portion (ou « payload ») dédiée aux données utiles, et destinée à leur port de destination.

Une trame Ethernet composite comporte donc des intervalles temporels (ou canaux TDM) qui appartiennent tous à une même période de temps de 125 µs et proviennent d'un ou plusieurs liens TDM. Un exemple de génération de trames Ethernet composites, selon l'invention, à partir de trames TDM provenant de différents liens est illustré sur la figure 2. Dans cet exemple, les rectangles TS j (j = 0 à 31) matérialisent les intervalles temporels (ou « time slots »), les rectangles « header MAC » matérialisent les champs d'entête MAC, et les rectangles « @Pk » (ici k = 1 à 13) matérialisent l'adresse Ethernet de la carte destination (c'est-à-dire ses ports de destination). Le champs « adresse Ethernet destination » fait en réalité partie de l'entête de la trame Ethernet (ou « header MAC »), contrairement à ce qui est schématiquement illustré sur la figure.

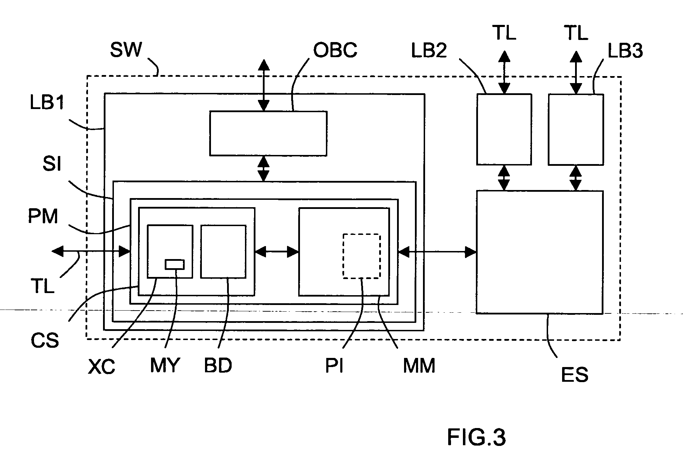

Pour effectuer l'opération de regroupement des trames TDM (ici de type E1) en fonction de leurs ports de destination, le module de traitement PM peut par exemple comporter, comme illustré sur la figure 3, un étage composite CS subdivisé en un module (ou une matrice) de connexion XC, chargé d'extraire des trames TDM les intervalles de temps (ou canaux TDM) présentant un même port de destination et de les ordonner, et un module d'agencement (ou « builder/debuilder ») BD chargé de générer des trains d'intervalles temporels (ou canaux TDM) ordonnés à partir des intervalles temporels extraits.

L'ordonnancement des intervalles temporels extraits des trames TDM peut se faire de façon « directe » en fonction de leur ordre dans les trames TDM reçues. Mais, cela n'est pas obligatoire. Dans le cas où l'ordonnancement des intervalles temporels (ou canaux TDM) ne se fait pas de façon directe, il peut se faire, par exemple, en accédant à une mémoire MY dans laquelle se trouve stockée une table établissant une correspondance entre les différents intervalles temporels (associés aux différents canaux logiques TDM), leurs positions choisies au sein des trames Ethernet composites et leurs positions réelles au sein des trames TDM. Par exemple, chaque module de traitement PM comporte sa propre mémoire MY qu'il peut balayer en 125 µS en confrontant les identifiants (appelés en anglais « Time Slot (ou TS) numbers ») des intervalles temporels extraits à ceux stockés dans la table. Cette mémoire MY peut éventuellement faire partie de l'étage composite CS, et par exemple de son module de connexion XC.

Préférentiellement, chaque carte de ligne LBi comporte un module de contrôle (ou « On-Board Controller ») OBC couplé au réseau de communication et chargé de fournir la table de correspondance à la mémoire MY du module de traitement PM de l'interface de commutation SI à laquelle il est associé. Cette table est par exemple mise à jour périodiquement et/ou consécutivement à chaque changement. Le module de contrôle OBC est par exemple un micro-contrôleur chargé du contrôle physique de l'interface de commutation SI, et notamment de la gestion des alarmes. Il est par exemple supervisé par une carte de contrôle implantée dans le commutateur SW.

Par ailleurs, pour effectuer l'opération d'intégration des intervalles temporels (ou canaux TDM) regroupés dans des trames Ethernet composites, le module de traitement PM peut par exemple comporter un module (ou composant) MAC (pour « Medium Access Control ») MM, couplé à l'étage composite CS et plus précisément à son module d'agencement BD. Ce module MAC est chargé de constituer les trames Ethernet composites en intégrant dans leur champ de payload les intervalles temporels extraits et ordonnés qui appartiennent à un même train, fourni par le module d'agencement BD, et dont le nombre est préférentiellement compris entre 46 et 1500.

Il est rappelé qu'une trame Ethernet, par exemple à marquage VLAN, comprend généralement un champ MAC de port de destination défini par 6 octets, un champ MAC de port source défini par 6 octets, un champ TPID (pour « Tag Protocol IDentifier ») défini par 2 octets, un champ TCI (pour « Tag Control Information ») défini par 2 octets et comportant notamment un sous-champ UP (pour « User Priority ») et un sous-champ VID (pour VLAN Identifier »), un champ TYPE LONG défini par 2 octets, un champ de payload, et un champ FCS (pour « Frame Check Sum ») défini par 4 octets.

Grâce à ce type d'insertion d'intervalles temporels dans le champ de payload, la trame Ethernet classique n'est pas modifiée, si bien que le module (ou composant) MAC MM, qui constitue une partie du module de traitement PM, est de type classique et ne nécessite pas d'aménagement.

Chaque trame Ethernet composite, qui comporte dans son champ de payload une suite ordonnée d'intervalles temporels (ou canaux TDM) fournie par le module de traitement PM, est ensuite communiquée à une interface physique PI afin d'être transmise au module de commutation de trames Ethernet ES en vue d'y être commutée vers la carte de ligne LBi correspondant au port de destination qui se trouve désigné dans son champ de port de destination.

Il est important de noter que l'invention permet la génération de trames Ethernet composites de longueur fixe ou variable.

Dans le cas fixe, toutes les trames Ethernet composites présentent une même longueur. En réception, chaque canal TDM (ou intervalle temporel) d'une trame Ethernet composite est alors identifié en fonction de sa position au sein du champ de payload, éventuellement par consultation de la table de correspondance. Cela permet de simplifier la génération des trames Ethernet composites, ainsi que la reconstitution des trames TDM initiales. Cependant, certaines positions du champ de payload peuvent se retrouver associées à des intervalles temporels (appelés inactifs) dépourvus de données, si bien qu'une partie de la bande passante est inutilement utilisée.

Le cas variable est destiné à remédier à l'inconvénient présenté par les trames Ethernet composites de longueur fixe. Au moins deux modes de réalisation du module de traitement PM, et plus précisément de l'étage composite CS, peuvent alors être envisagés.

Dans un premier mode de réalisation, le module de traitement PM est agencé de manière à tronquer chaque trame Ethernet composite après la position qui est associée à son dernier intervalle temporel actif (c'est-à-dire associé à des données). Il est alors préférable que la troncature ne soit appliquée qu'après une position selon laquelle la longueur de la trame Ethernet composite est supérieure à un nombre d'octets choisi. Ce nombre d'octets est par exemple choisi égal à 64. C'est préférentiellement le module d'agencement BD qui se charge de cette opération de troncature.

Dans un second mode de réalisation, le module de traitement PM est agencé de manière à associer à chaque trame Ethernet composite des données d'information qui sont représentatives de sa longueur (et plus précisément du nombre d'intervalles actifs transportés) et des positions des intervalles temporels actifs qu'elle contient dans son champ de payload. A cet effet, le module de traitement PM, et plus précisément son étage composite CS, peut par exemple intégrer les données d'information en un endroit choisi du champ de payload de la trame Ethernet composite. Cela peut par exemple se faire sous la forme d'un entête occupant les premières positions du champ de payload. En réception, les trames TDM sont alors reconstituées en fonction des positions respectives des intervalles temporels (ou canaux TDM), contenus dans le champ de payload, et des données d'information contenues dans l'entête dudit champ de payload.

Le module de traitement PM, et de préférence son étage composite CS, peut être agencé de manière à associer à certaines au moins des trames Ethernet composites, par exemple à la demande du module de contrôle OBC, un niveau de priorité de transmission. Par exemple, lorsque le niveau de priorité concerne le niveau (ou « layer ») deux, il peut être défini dans le sous-champ UP (User Priority) du champ TCI (Tag Control Identifier) conformément au standard IEEE 802.1p. Bien entendu, d'autres types de priorité peuvent être envisagés.

Lorsque le module de commutation de trame Ethernet ES reçoit des trames Ethernet composites comportant des niveaux de priorité, il les classe en fonction de ces derniers de manière à les transmettre aux cartes de ligne LBi concernées les unes après les autres selon l'ordre temporel défini par le classement.

Ainsi, pour les trames comportant le niveau de priorité le plus élevé, le temps de transfert, dans le commutateur SW, peut être garanti sensiblement constant et inférieur ou égal à nx125 µs, avec 2 ≤ n ≤ 10.

Lorsque le module de traitement PM est agencé de manière à commuter d'autres trames Ethernet que les trames Ethernet composites, il peut associer aux trames Ethernet composites une priorité plus grande que celle associée aux autres trames afin de leur garantir un temps de transfert minimum.

Lorsqu'une trame Ethernet composite parvient au niveau d'une carte de ligne LBi' après avoir été commutée par le module de commutation Ethernet ES, elle est prise en charge par son module de traitement PM. Plus précisément, le module de traitement PM commence par extraire les intervalles temporels qui sont contenus dans son champ de payload en conservant leurs positions respectives. Puis, il détermine leurs positions originelles (ou réelles) au sein des trames TDM en fonction de leurs positions respectives au sein de la trame Ethernet composite reçue, par exemple en accédant à la table de correspondance. Enfin, il reconstitue les trames TDM à partir des intervalles temporels extraits et de leurs positions réelles.

Par exemple, le module MAC MM est chargé d'extraire les octets du champ de payload, des trames Ethernet composites successivement transmises par l'interface physique Pl, en respectant leurs ordonnancements respectifs, puis le module d'agencement BD de l'étage composite CS est chargé de constituer un train d'octets à partir desdits octets extraits, toujours en respectant l'ordonnancement initial. Pour ce faire, il accède à la table de correspondance stockée dans la mémoire MY (lorsque celle-ci est prévue), afin de la balayer en 125 µs en confrontant les identifiants (TS numbers) des intervalles temporels extraits (ou octets) à ceux stockés dans la table.

Ensuite, le module de connexion XC de l'étage composite CS se charge de ranger les octets des trains reçus dans des trames TDM, en fonction de leurs positions respectives.

Le module de traitement PM peut par ailleurs être chargé de contrôler un mécanisme de distribution d'horloge, par exemple à 8 kHz, via le module de commutation Ethernet ES. Ce mécanisme est destiné à synchroniser les cartes de ligne LBi entre elles. Il peut par exemple consister à récupérer du rythme au moyen des récepteurs des cartes de ligne LBi. Plus précisément, les récepteurs sont chargés de reconstruire l'horloge d'émission à partir d'informations de synchronisation qui sont transmises au travers du module de commutation Ethernet ES ou bien intégrées dans les trames Ethernet composites et/ou transportées dans des trames Ethernet non composites. Le mécanisme peut également (en variante ou en complément) consister à diffuser du rythme par des liaisons de synchronisation dédiées entre les cartes de ligne LBi (qui ne transitent pas nécessairement par le module de commutation Ethernet ES).

Le commutateur SW, selon l'invention, et notamment son module de traitement PM, peut être réalisé sous la forme de circuits électroniques, de modules logiciels (ou informatiques), ou d'une combinaison de circuits et de logiciels.

Grâce à l'invention, les trames Ethernet composites permettent le transport et la commutation de canaux TDM, par exemple à 64 kbits/s, tout en conservant une continuité temporelle (par exemple un échantillon toutes les 125 µs) et un temps de transfert sensiblement constant (nx125 µs, avec 2 ≤ n ≤ 10) dans le module de commutation (ou commutateur) Ethernet. Cela permet d'éviter d'avoir recours à un annuleur d'écho dans la chaîne de transport, ce qui est particulièrement intéressant, notamment sur le plan économique.

L'invention ne se limite pas aux modes de réalisation de commutateur décrits ci-avant, seulement à titre d'exemple, mais elle englobe toutes les variantes que pourra envisager l'homme de l'art dans le cadre des revendications ci-après.

## Revendications

1. Commutateur (SW) pour un réseau de communication à multiplexage temporel, ledit commutateur (SW) comprenant au moins une carte de ligne (LBi) munie d'une interface de commutation (SI) propre à être raccordée à au moins un lien TDM (TL), pour la commutation de trames TDM d'un type choisi, comportant des intervalles temporels multiplexés temporellement et associés chacun à un canal TDM de transmission, chaque interface de commutation (SI)comportant :
- des moyens de traitement (PM) agencés pour :
- regrouper des intervalles temporels compris dans les trames TDM reçues et comportant la désignation d'un même port de destination ;
- puis les intégrer dans une trame Ethernet composite en des positions choisies d'une portion, dédiée aux données dites « utiles », et destinée à leur port de destination,
- et des moyens de commutation de trame Ethernet (ES) connectés à chaque carte de ligne et chargés de commuter les trames Ethernet composites vers l'une au moins des cartes de ligne (LBi) en fonction de leurs ports de destination respectifs ;
**caractérisé en ce que** lesdits moyens de traitement (PM) sont agencés pour regrouper des intervalles temporels compris dans les trames TDM reçues sur une pluralité de ses liens TDM (TL), et comportant la désignation d'un même port de destination.

2. Commutateur selon la revendication 1, **caractérisé en ce que** lesdits moyens de traitement (PM) sont agencés, à réception d'une trame Ethernet composite, pour :
- extraire les intervalles temporels qu'elle contient dans sa portion de données utiles en conservant leurs positions respectives,
- puis pour déterminer les positions réelles desdits intervalles temporels extraits, au sein desdites trames TDM, en fonction de leurs positions respectives,
- et reconstituer des trames TDM à partir desdits intervalles temporels et de leurs positions réelles.

3. Commutateur selon la revendication 1, **caractérisé en ce qu'**il comprend au moins une mémoire (MY) dans laquelle est stockée une table établissant une correspondance entre lesdits intervalles temporels, leurs positions au sein des trames Ethernet composites et leurs positions réelles au sein des trames TDM, et **en ce que** lesdits moyens de traitement (PM) sont agencés pour accéder à ladite mémoire (MY), d'une part, pour déterminer les positions des intervalles temporels extraits devant être intégrés dans des trames Ethernet composites, et d'autre part, pour déterminer les positions réelles des intervalles temporels extraits d'une trame Ethernet composite reçue.

4. Commutateur selon la revendication 3, **caractérisé en ce que** chaque interface de commutation (SI) comprend une mémoire (MY) stockant ladite table de correspondance.

5. Commutateur selon la revendication 4, **caractérisé en ce que** chaque carte de ligne (LBi) comprend des moyens de contrôle (OBC) agencés pour fournir ladite table de correspondance à la mémoire (MY) de l'interface de commutation (SI) associée.

6. Commutateur selon la revendication 1, **caractérisé en ce que** lesdits moyens de traitement (PM) sont agencés pour associer à certaines au moins desdites trames Ethernet composites un niveau de priorité de transmission, de sorte que lesdits moyens de commutation de trame Ethernet (ES) transmettent les trames Ethernet composites qu'ils reçoivent aux cartes de ligne (LBi) concernées selon un ordre temporel fonction de leurs niveaux de priorité respectifs.

7. Commutateur selon la revendication 6, **caractérisé en ce que** lesdits moyens de traitement (PM) sont agencés pour commuter des trames Ethernet non composites, et pour associer aux trames Ethernet composites une priorité plus grande que celle associée aux trames Ethernet non composites, de manière à garantir auxdites trames Ethernet composites un temps de transfert minimum.

8. Commutateur selon la revendication 1, **caractérisé en ce que** lesdits moyens de traitement (PM) sont agencés pour constituer des trames Ethernet composites de longueur fixe.

9. Commutateur selon selon la revendication 1, **caractérisé en ce que** lesdits moyens de traitement (PM) sont agencés pour constituer des trames Ethernet composites de longueur variable.

10. Commutateur selon la revendication 9, **caractérisé en ce que** lesdits moyens de traitement (PM) sont agencés pour tronquer une trame Ethernet composite après la position associée à son dernier intervalle temporel actif.

11. Commutateur selon la revendication 10, **caractérisé en ce que** lesdits moyens de traitement (PM) sont agencés pour tronquer ladite trame Ethernet composite lorsque sa longueur est supérieure à un nombre d'octets choisi.

12. Commutateur selon la revendication 9, **caractérisé en ce que** lesdits moyens de traitement (PM) sont agencés pour associer auxdites trames Ethernet composites des données d'information représentatives de leur longueur et des positions des intervalles temporels qu'elles contiennent.

13. Commutateur selon la revendication 12, **caractérisé en ce que** lesdits moyens de traitement (PM) sont agencés pour intégrer lesdites données d'information dans la portion de données utiles des trames Ethernet composites, sous la forme d'un entête.

14. Commutateur selon la revendication 12, **caractérisé en ce que** lesdits moyens de traitement (PM) sont agencés, à réception d'une trame Ethernet composite, pour déterminer les positions réelles desdits intervalles temporels extraits en fonction de leurs positions respectives et desdites données d'information.

15. Commutateur selon la revendication 1, **caractérisé en ce que** lesdits moyens de traitement (PM) sont agencés pour contrôler un mécanisme de distribution d'horloge, via lesdits moyens de commutation de trame Ethernet (ES), destiné à synchroniser lesdites cartes de ligne (LBi) entre elles.

16. Commutateur selon la revendication 15, **caractérisé en ce que** lesdits moyens de traitement (PM) sont agencés pour récupérer un rythme au moyen de récepteurs desdites cartes de ligne (LBi).

17. Commutateur selon l'une des revendications 15 et 16, **caractérisé en ce que** lesdits moyens de traitement (PM) sont agencés pour diffuser un rythme par des liaisons dédiées entre lesdites cartes de ligne (LBi).

## Claims

1. A switch (SW) for a time division multiplex (TDM) communications network, said switch (SW) comprising at least one line board (LBi) having a switching interface (SI) adapted to be connected to at least one TDM link (TL) for switching TDM frames of a selected type including time division multiplexed time slots and each associated with a TDM transmission channel, each switching interface (SI) including:
- processing means (PM) adapted:
to group time slots contained in TDM frames received and including the designation of the same destination port; and
then to integrate them into a composite Ethernet frame at selected positions of a portion dedicated to "payload" data and addressed to their destination port, and
- Ethernet frame switching means (ES) connected to each line board for switching the composite Ethernet frames to at least one of the line boards (LBi) as a function of their respective destination ports;
**characterised in that** said processing means (PM) are designed to group time slots contained in TDM frames received over a plurality of its TDM links (TL), and including the designation of the same destination port.

2. A switch according to claim 1, **characterised in that**, on receiving a composite Ethernet frame, said processing means (PM) are adapted:
to extract the time slots that it contains in its payload data portion, preserving their respective positions, then
to determine the real positions of said extracted time slots within said TDM frames as a function of their respective positions, and
to reconstitute TDM frames from said time slots and their real positions.

3. A switch according to claim 1, **characterised in that** it comprises a memory (MY) which stores a table of the correspondences between said time slots, their positions within the composite Ethernet frames and their real positions within the TDM frames, and
**in that** said processing means (PM) access said memory (MY) to determine the positions of the extracted time slots to be integrated into composite Ethernet frames and to determine the real positions of the time slots extracted from a received composite Ethernet frame.

4. A switch according to claim 3, **characterised in that** each switching interface (Sl) comprises a memory (MY) storing said table of correspondences.

5. A switch according to claim 4, **characterised in that** each line board (LBi) comprises control means (OBC) adapted to supply said table of correspondences to the memory (MY) of the associated switching interface (SI).

6. A switch according to claim 1, **characterised in that** said processing means (PM) are adapted to associate a transmission priority level with at least some of said composite Ethernet frames so that said Ethernet frame switching means (ES) send the composite Ethernet frames that they receive to the line board (LBi) concerned in a time order that is a function of their respective priority levels.

7. A switch according to claim 6, **characterised in that** said processing means (PM) are adapted to switch non-composite Ethernet frames and to assign composite Ethernet frames a priority higher than that associated with non-composite Ethernet frames to guarantee said composite Ethernet frames a minimum transfer time.

8. A switch according to claim 1, **characterised in that** said processing means (PM) are adapted to constitute composite Ethernet frames of fixed length.

9. A switch according to claim 1, **characterised in that** said processing means (PM) are adapted to constitute composite Ethernet frames of variable length.

10. A switch according to claim 9, **characterised in that** said processing means (PM) are adapted to truncate a composite Ethernet frame after the position associated with its last active time slot.

11. A switch according to claim 10, **characterised in that** said processing means (PM) are adapted to truncate said composite Ethernet frame if its length is greater than a selected number of bytes.

12. A switch according to claim 9, **characterised in that** said processing means (PM) are adapted to associate with said composite Ethernet frames information data representing their length and the positions of the time slots that they contain.

13. A switch according to claim 12, **characterised in that** said processing means (PM) are adapted to integrate said information data into the payload data portion of the composite Ethernet frames in the form of a header.

14. A switch according to claim 12, **characterised in that** said processing means (PM) are adapted, on receiving a composite Ethernet frame, to determine the real positions of said extracted time slots as a function of their respective positions and said information data.

15. A switch according to claim 1, **characterised in that** said processing means (PM) are adapted to control a mechanism for synchronising said line boards (LBi) with each other by distributing a clock via said Ethernet frame switching means (ES).

16. A switch according to claim 15, **characterised in that** said processing means (PM) are adapted to perform timing recovery by means of receivers of said line boards (LBi).

17. A switch according to either claim 15 or claim 16, **characterised in that** said processing means (PM) are adapted to broadcast timing over dedicated links between said line boards (LBi).

## Patentansprüche

1. Vermittlungsstelle (SW) für ein Zeitmultiplex-Kommunikationsnetz, wobei die genannte Vermittlungsstelle mindestens eine Leitungskarte (LBi) umfasst, die mit einer Vermittlungsschnittstelle (SI) ausgerüstet ist, die mit mindestens einer TDM-Leitung (TL) verbunden werden kann, um TDM-Rahmen eines bestimmten Typs zu vermitteln, die zeitlich multiplexte Zeitschlitze umfassen und jeweils einem TDM-Übertragungskanal zugeordnet sind,
wobei jede Vermittlungsschnittstelle (SI) Folgendes umfasst:
- Verarbeitungseinrichtungen (PM), die entsprechend ausgeführt sind, um:
o die in den empfangenen TDM-Rahmen enthaltenen Zeitschlitze, die die Bezeichnung des gleichen Zielanschlusses beinhalten, zusammenzufassen;
o diese anschließend in einen zusammengestellten Ethernetrahmen an bestimmten Positionen eines Abschnitts einzufügen, der für die so genannten Nutzdaten dediziert und für ihren Zielanschluss bestimmt ist,
- und Vermittlungseinrichtungen für Ethernetrahmen (ES), die mit jeder Leitungskarte verbunden sind und die Aufgabe haben, die zusammengestellten Ethernetrahmen in Abhängigkeit von ihren jeweiligen Zielanschlüssen an mindestens eine der Leitungskarten (LBi) zu vermitteln;
**dadurch gekennzeichnet, dass** die genannten Verarbeitungseinrichtungen (PM) entsprechend ausgeführt sind, um die in den über eine Vielzahl von TDM-Leitungen (TL) empfangenen TDM-Rahmen enthaltenen Zeitschlitze zusammenzufassen, die die Bezeichnung des gleichen Zielanschlusses umfassen.

2. Vermittlungsstelle gemäß Anspruch 1, **dadurch gekennzeichnet, dass** die genannten Verarbeitungseinrichtungen (PM) entsprechend ausgeführt sind, um beim Empfang eines zusammengestellten Ethernetrahmens:
- die Zeitschlitze auszulesen, die in seinem Nutzdatenabschnitt enthalten sind, wobei ihre jeweiligen Positionen beibehalten werden,
- und anschließend die tatsächlichen Positionen der genannten ausgelesenen Zeitschlitze innerhalb der genannten TDM-Rahmen in Abhängigkeit von ihren jeweiligen Positionen zu ermitteln,
- und die TDM-Rahmen ausgehend von den genannten Zeitschlitzen und ihren tatsächlichen Positionen wiederherzustellen.

3. Vermittlungsstelle gemäß Anspruch 1, **dadurch gekennzeichnet, dass** sie mindestens einen Speicher (MY) umfasst, in dem eine Tabelle abgelegt ist, die eine Zuordnung zwischen den genannten Zeitschlitzen, ihren Positionen innerhalb der zusammengestellten Ethernetrahmen und ihren tatsächlichen Positionen innerhalb der TDM-Rahmen beinhaltet, sowie **dadurch**, dass die genannten Verarbeitungseinrichtungen (PM) entsprechend ausgeführt sind, um auf den genannten Speicher (MY) zuzugreifen, um einerseits die Positionen der ausgelesenen Zeitschlitze zu ermitteln, die in die zusammengestellten Ethernetrahmen eingefügt werden müssen, und andererseits um die tatsächlichen Positionen der aus einem empfangenen zusammengestellten Ethernetrahmen ausgelesenen Zeitschlitze zu ermitteln.

4. Vermittlungsstelle gemäß Anspruch 3, **dadurch gekennzeichnet, dass** jede Vermittlungsschnittstelle (SI) einen Speicher (MY) umfasst, in dem die genannte Zuordnungstabelle abgelegt ist.

5. Vermittlungsstelle gemäß Anspruch 4, **dadurch gekennzeichnet, dass** jede Leitungskarte (LBi) Steuervorrichtungen (OBC) umfasst, die entsprechend ausgeführt sind, um die genannte Zuordnungstabelle an den Speicher (MY) der zugeordneten Vermittlungsschnittstelle (SI) zu übertragen.

6. Vermittlungsstelle gemäß Anspruch 1, **dadurch gekennzeichnet, dass** die genannten Verarbeitungseinrichtungen (PM) entsprechend ausgeführt sind, um zumindest bestimmten der genannten zusammengestellten Ethernetrahmen eine Prioritätsstufe zuzuordnen, so dass die genannten Vermittlungseinrichtungen für Ethernetrahmen (ES) die zusammengestellten Ethernetrahmen, die sie an den betreffenden Leitungskarten (LBi) empfangen, in einer zeitlichen Reihenfolge entsprechend ihrer jeweiligen Prioritätsstufe ordnen.

7. Vermittlungsstelle gemäß Anspruch 6, **dadurch gekennzeichnet, dass** die genannten Verarbeitungsvorrichtungen (PM) entsprechend ausgeführt sind, um nicht zusammengestellte Ethernetrahmen zu vermitteln und den zusammengestellten Ethernetrahmen eine höhere Priorität zuzuordnen als den nicht zusammengestellten Ethernetrahmen, so dass für die genannten zusammengestellten Ethernetrahmen eine minimale Übertragungszeit garantiert ist.

8. Vermittlungsstelle gemäß Anspruch 1, **dadurch gekennzeichnet, dass** die genannten Verarbeitungseinrichtungen (PM) entsprechend ausgeführt sind, um zusammengestellte Ethernetrahmen mit fester Länge zu erzeugen.

9. Vermittlungsstelle gemäß Anspruch 1, **dadurch gekennzeichnet, dass** die genannten Verarbeitungseinrichtungen (PM) entsprechend ausgeführt sind, um zusammengestellte Ethernetrahmen mit variabler Länge zu erzeugen.

10. Vermittlungsstelle gemäß Anspruch 9, **dadurch gekennzeichnet, dass** die genannten Verarbeitungseinrichtungen (PM) entsprechend ausgeführt sind, um einen zusammengestellten Ethernetrahmen nach der seinem letzten aktiven Zeitschlitz zugeordneten Position abzuschneiden.

11. Vermittlungsstelle gemäß Anspruch 10, **dadurch gekennzeichnet, dass** die genannten Verarbeitungseinrichtungen (PM) entsprechend ausgeführt sind, um den genannten zusammengestellten Ethernetrahmen abzuschneiden, wenn seine Länge über einer gewählten Anzahl an Bytes liegt.

12. Vermittlungsstelle gemäß Anspruch 9, **dadurch gekennzeichnet, dass** die genannten Verarbeitungseinrichtungen (PM) entsprechend ausgeführt sind, um den genannten zusammengestellten Ethernetrahmen Informationsdaten zuzuordnen, die für ihre Länge und die Positionen der darin enthaltenen Zeitschlitze repräsentativ sind.

13. Vermittlungsstelle gemäß Anspruch 12, **dadurch gekennzeichnet, dass** die genannten Verarbeitungseinrichtungen (PM) entsprechend ausgeführt sind, um die genannten Informationsdaten in Form eines Headers in den Nutzdatenabschnitt der zusammengestellten Ethernetrahmen zu integrieren.

14. Vermittlungsstelle gemäß Anspruch 12, **dadurch gekennzeichnet, dass** die genannten Verarbeitungseinrichtungen (PM) entsprechend ausgeführt sind, um beim Empfang eines zusammengestellten Ethernetrahmens die tatsächlichen Positionen der genannten ausgelesenen Zeitschlitze in Abhängigkeit von ihren jeweiligen Positionen und den genannten Informationsdaten zu ermitteln.

15. Vermittlungsstelle gemäß Anspruch 1, **dadurch gekennzeichnet, dass** die genannten Verarbeitungseinrichtungen (PM) entsprechend ausgeführt sind, um über die genannten Vermittlungseinrichtungen für Ethernetrahmen (ES) einen Taktgeber-Mechanismus zu steuern, der dazu dient, die genannten Leitungskarten (LBi) miteinander zu synchronisieren.

16. Vermittlungsstelle gemäß Anspruch 15, **dadurch gekennzeichnet, dass** die genannten Verarbeitungseinrichtungen (PM) entsprechend ausgeführt sind, um den Takt mit Hilfe von Empfangseinrichtungen der genannten Leitungskarten (LBi) zu erfassen.

17. Vermittlungsstelle gemäß einem der Ansprüche 15 und 16, **dadurch gekennzeichnet, dass** die genannten Verarbeitungseinrichtungen (PM) entsprechend ausgeführt sind, um einen Takt über die dedizierten Verbindungen zwischen den Leitungskarten (LBi) zu übermitteln.
